(19)

**Europäisches Patentamt**
**European Patent Office**
**Office européen des brevets**

(11) **EP 3 893 171 A1**

(12) **EUROPEAN PATENT APPLICATION**

(43) Date of publication:
**13.10.2021  Bulletin 2021/41**

(51) Int Cl.:
$G06Q\ 10/04$ (2012.01)      $G06Q\ 50/28$ (2012.01)

(21) Application number: **21153206.4**

(22) Date of filing: **25.01.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.04.2020   JP 2020069720**

(71) Applicant: **FUJITSU LIMITED**
**Kanagawa 211-8588 (JP)**

(72) Inventor: **Ito, Yuto**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING DEVICE, INFORMATION PROCESSING METHOD, AND INFORMATION PROCESSING PROGRAM**

(57)   A method includes: obtaining, with respect to a route optimization problem that packages are delivered to or from a plurality of nodes by using a plurality of mobile bodies, node information that specifies each node included in the plurality of nodes, demand amount information that indicates a demand amount of each of the plurality of nodes, and mobile body information that indicates a maximum load capacity of each of the plurality of mobile bodies; executing a generation process to specify a node group, among the plurality of nodes, to which the packages are delivered and that satisfies a condition of the maximum load capacity for each of the plurality of mobile bodies and generate a plurality of routes that defines a delivery order of each node included in the node group; and executing a calculation process to execute processing for solving the route optimization problem using the plurality of routes.

**Description**

FIELD

The embodiments discussed herein are related to an information processing device, an information processing method, and an information processing program.

BACKGROUND ART

One of combination optimization problems is a problem called a route optimization problem. This problem is sometimes referred to as the Vehicle Routing Problem (VRP). Specifically, in the VRP, a facility that serves as a base and is referred to as a depot and a plurality of other facilities that is a branch and is referred to as a node are defined. Then, a route that minimizes cost needed for delivery is obtained from among routes in which a plurality of mobile bodies, for example, trucks delivers packages from the depot to the nodes and return to the depot again or in which the plurality of trucks departed from the depot delivers packages from the nodes to the depot.

Here, given data of the VRP includes the number of nodes, a time needed for the truck to travel between the nodes, a package amount that needs to be delivered from the depot to each node or from each node to the depot (hereinafter, may be referred to as "demand"), a time band when the truck can visit each node (hereinafter, may be referred to as "time window"), a maximum load capacity of each truck, cost caused when each truck is operated for a certain period of time, or the like.

The VRP is a problem for obtaining a route of each truck so as to minimize the sum of costs of the trucks when the above data is given. Note that the route of each truck includes a node to which the truck visits and a time when the truck visits the node and an amount of the packages to be delivered to or from each visited node (hereinafter, may be referred to as "supply"). Furthermore, the cost of the truck includes a time period needed for delivery and delivery charges such as gasoline fee, various costs, or the like for delivery.

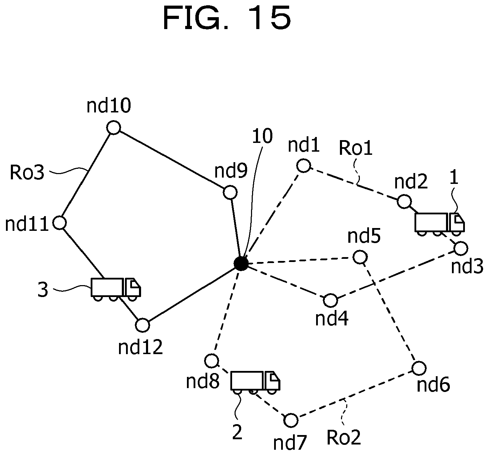

FIG. 15 is a diagram for explaining routes of trucks. In an example illustrated in FIG. 15, a depot 10 and nodes nd1 to nd12 are included. In the description of FIG. 15, a time when the truck visits the node and a supply are not illustrated. For example, it is assumed that a route of a truck 1 is a route Ro1, a route of a truck 2 is a route Ro2, and a route of a truck 3 is a route Ro3. The route Ro1 is a route in which the truck 1 visits the depot 10 and the nodes nd1 to nd4. The route Ro2 is a route in which the truck 2 visits the depot 10 and the nodes nd5 to nd8. The route Ro3 is a route in which the truck 3 visits the depot 10 and the nodes nd9 to nd11.

Here, in a case where the VRP is solved, after generating the routes, an optimum route is selected from among the generated routes. Specifically, as the route of each truck, routes that satisfy conditions of the problem (conditions such as time window or maximum load capacity) are generated as many as possible. Next, an optimum route is obtained by solving an optimization problem that selects a pair of routes that satisfies demands of all the nodes and minimizes the sum of costs from among the generated routes.

SUMMARY

[TECHNICAL PROBLEM]

However, according to the above technique, a processing time period of route generation executed before solving the optimization problem that selects the pair of routes that minimizes the sum of the costs increases, and a time to solve the vehicle routing problem increases.

For example, for each route generated as a route of a certain service, a plurality of routes is generated in a tree structure as routes of the next service. Therefore, the number of routes generated for the subsequent services becomes enormous, and the route generation processing time increases. Furthermore, when the number of nodes, the number of trucks, and the number of demands become enormous, the enormous routes are examined and generated. Therefore, there is a possibility that the route generation processing is not completed depending on a performance of a computer.

According to one aspect of the embodiments, provided is a solution to shorten a time to solve the vehicle routing problem.

[SOLUTION TO PROBLEM]

According to an aspect of the embodiments, provided is an information processing method implemented by a computer. In an example, the information processing method includes: obtaining, with respect to a route optimization problem that packages are delivered to or from a plurality of nodes by using a plurality of mobile bodies, node information that specifies each node included in the plurality of nodes, demand amount information that indicates a demand amount of each of the plurality of nodes, and mobile body information that indicates a maximum load capacity of each of the plurality of mobile bodies; executing a generation process configured to specify a node group, among the plurality of nodes, to which the packages are delivered and that satisfies a condition of the maximum load capacity for each of the plurality of mobile bodies and generate a plurality of routes that defines a delivery order of each node included in the node group; and executing a calculation process configured to execute processing for solving the route optimization problem on the basis of the plurality of routes generated by the generation process, wherein the generation process is configured to execute processes on the basis of the node information, the demand amount information, and the mobile body information, the processes including: performing a specification process configured to specify a first node group to which the packages are delivered by an N-th mobile body of the plurality of mobile bodies from among the plurality of nodes; performing an information generation process configured to generate residual demand information that indicates a residual demand after the packages are delivered by the N-th mobile body for each node included in the first node group; and performing an information update process configured to update the node information by excluding a node that has no residual demand among the plurality of nodes from the plurality of nodes on the basis of the residual demand information, the generation process is configured to: sequentially executes, for each of the plurality of mobile bodies, the specification process, the information generation process, and the information update process; obtain a determination result by determining whether the number of nodes that has no residual demand is equal to or more than a predetermined value on the basis of the node information updated by the information update process; and in response to the determination result indicating that the number of nodes that has no residual demand is equal to or more than the predetermined value, stop processing for sequentially executing the specification process, the information generation process, and the information update process.

[ADVANTAGEOUS EFFECTS OF INVENTION]

According to one aspect, it is possible to shorten a time to solve the vehicle routing problem.

BRIEF DESCRIPTION OF DRAWINGS

FIG. 1 is a diagram for explaining an information processing device according to a first embodiment;
FIG. 2 is a diagram for explaining a reference technique for route generation;
FIG. 3 is a diagram illustrating a relationship between a duration and cost of each route;
FIG. 4 is a flowchart illustrating a processing procedure of a reference device;
FIG. 5 is a diagram illustrating an example of a processing procedure of route generation processing;
FIG. 6 is a functional block diagram illustrating a functional configuration of the information processing device according to the first embodiment;
FIG. 7 is a diagram illustrating an example of a data structure of a travel time table;
FIG. 8 is a diagram illustrating an example of a data structure of a demand table;
FIG. 9 is a diagram illustrating an example of a data structure of a time window table;
FIG. 10 is a diagram for explaining route generation;
FIG. 11 is a flowchart illustrating a flow of an optimization processing procedure according to the first embodiment;
FIG. 12 is a flowchart illustrating a flow of a route generation procedure according to the first embodiment;
FIG. 13 is a diagram for explaining effects;
FIG. 14 is a diagram for explaining an exemplary hardware configuration; and
FIG. 15 is a diagram for explaining routes of trucks.

DESCRIPTION OF EMBODIMENTS

Embodiments of an information processing device, an information processing method, and an information processing program disclosed in the present application will be described in detail with reference to the drawings below. Note that the present embodiments are not limited to the examples. Furthermore, the embodiments can be appropriately combined within a range without inconsistency.

[First Embodiment]

[Description of Information Processing Device]

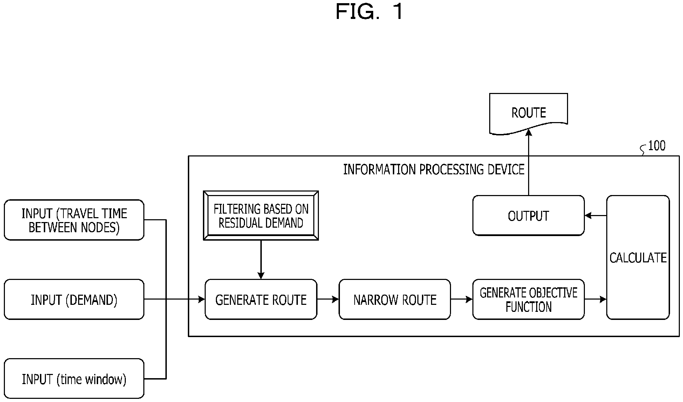

FIG. 1 is a diagram explaining an information processing device 100 according to a first embodiment. The information processing device 100 illustrated in FIG. 1 is an example of a computer device that optimizes the vehicle routing problem in which a plurality of trucks (may be referred to as "vehicle" below) delivers packages to a plurality of nodes and that obtains a route that minimizes cost of the vehicles.

(Explanation of Reference Technique)

Here, a reference technique that is generally used will be described. A device regarding the reference technique is described as a "reference device" for convenience. For example, the reference device executes processing for generating a route, processing for narrowing a route, and processing for selecting a route.

First, the "processing for generating a route" executed by the reference device will be described. The reference device specifies a node group, to which packages are delivered, among a plurality of nodes that is a node group that satisfies a maximum load capacity condition of a truck for each of the plurality of trucks and generates a plurality of routes that defines a delivery order of each node included in the node group. More specifically, the reference device holds node information indicating each node included in the plurality of nodes, demand information indicating a demand of each node, and mobile body information indicating the maximum load capacity of each truck. The reference device specifies a first node group, to which packages are delivered by an N-th truck among the plurality of trucks, from among the plurality of nodes on the basis of the node information, the demand information, and the mobile body information. A total value of a demand amount of the nodes included in the first node group is set not to exceed the maximum load capacity of the truck. Moreover, the reference device determines an order in which the truck delivers the packages to the nodes included in the first node group. For example, information indicating the order in which the truck delivers the packages to the nodes included in the first node group corresponds to information indicating a traveling route of the truck.

Note that a delivery order of each node included in the first node group by the truck is selected so that a time period needed for delivery by the truck is minimized. Processing for determining the delivery order so that the time period needed for delivery is minimized may be executed by using a combination optimization device such as an Ising machine. Note that a plurality the first node groups may be specified.

Next, the reference device generates residual demand information indicating a residual demand after the N-th truck has delivered the packages for each node included in the first node group. The reference device updates the node information by excluding the node having no residual demand among the plurality of nodes from the plurality of nodes on the basis of the residual demand information.

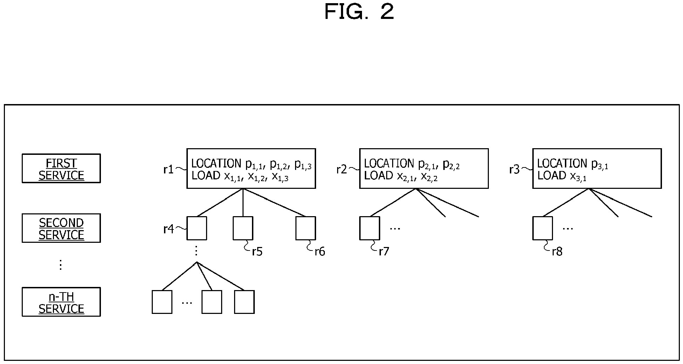

The reference device sequentially executes the specifying processing, the processing for generating the information, and the processing for updating the information on each of the plurality of mobile bodies and generates information indicating the plurality of traveling routes. Hereinafter, the traveling route is simply referred to as a "route". Next, the generation of the route information will be described with reference to FIG. 2.

FIG. 2 is a diagram for explaining a reference technique for the route generation. As illustrated in FIG. 2, the reference device generates a route that satisfies conditions of the vehicle routing problem as a route for a first truck. Note that, if all the routes that satisfy the conditions of the vehicle routing problem are generated, the number of all the generated routes becomes enormous. Therefore, for example, limitation such as to generate only routes in which a load ratio is equal to or more than a threshold is provided. FIG. 2 illustrates that three types of routes (route r1, route r2, and route r3) are generated as the first service, and each truck may visit a plurality of nodes.

The route r1 is a route that passes through a plurality of nodes $p_{1,1}$, $p_{1,2}$, and $p_{1,3}$ in a predetermined order. Here, regarding the route r1, load amounts $x_{1,1}$, $x_{1,2}$, and $x_{1,3}$ respectively corresponding to the plurality of nodes $p_{1,1}$, $p_{1,2}$, and $p_{1,3}$ respectively correspond to demands of the corresponding nodes. For example, the demand of the node $p_{1,1}$ is "$x_{1,1}$".

The route r2 is a route that passes through nodes $p_{2,1}$ and $p_{2,2}$ in a predetermined order. Load amounts $x_{2,1}$ and $x_{2,2}$ respectively corresponding to the nodes $p_{2,1}$ and $p_{2,2}$ respectively correspond to demands of the corresponding nodes.

The route r3 is a route that passes through a node $p_{3,1}$. A load amount $x_{2,1}$ corresponding to the node $p_{3,1}$ corresponds to a demand of the corresponding node. Here, the reference device generates the residual demand information indicating an amount of the packages (residual demand) that have not been delivered by the trucks. The residual demand information may be generated by updating the demand information.

Next, the reference device generates a route for delivering packages that have not been delivered by the routes for the first service to an i-1-th service as a route of an i-th ($i > 2$) service on the basis of the residual demand information. FIG. 2 illustrates that, in a case where the first service delivers packages through the route r1, routes r4, r5, and r6 are generated as a second service. Depending on whether the first service delivers the packages through the route r1 or the route r2, a residual demand thereafter differs. Therefore, the routes generated for the second service differ. For example, in a case where the first service delivers the packages through the route r2, a route r7 or the like is generated as the second service. In a case where the first service delivers the packages through the route r3, a route r8 or the like is generated as the second service. Description regarding locations and load amounts of the routes r4 to r8 will be omitted.

Then, after delivery through a route generated for an n-th service, the reference device does not generate routes for an n + 1-th service and subsequent services in a case where the residual demands of all the nodes are zero.

Subsequently, the "processing for narrowing a route" executed by the reference device will be described. The reference device executes processing for removing a route of which a duration is equal to or more than a threshold (duration_thres) from the plurality of routes generated by the processing for generating the above route, for example. Note that the reference device may remove a route of which a traveling distance is equal to or longer than a predetermined threshold, instead of the duration.

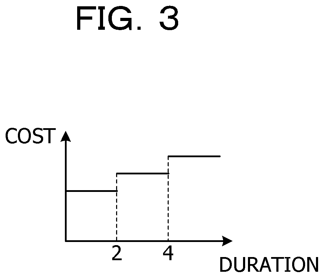

FIG. 3 is a diagram illustrating a relationship between a duration and cost of each route. The horizontal axis of the graph in FIG. 3 corresponds to the duration of the route, and the vertical axis corresponds to the cost of the vehicle. As illustrated in FIG. 3, as the duration of the route increases, the cost of the vehicle that travels through the route increases in a stepwise manner. Here, the cost of the vehicle includes a time period needed for delivery and delivery charges such as gasoline fee, various costs, or the like for delivery.

Subsequently, the "processing for selecting a route" executed by the reference device will be described. The reference device solves an optimization problem that selects a pair of routes that satisfies the demand and minimizes the sum of costs from among the routes narrowed by the processing for narrowing the above route by using the optimizer.

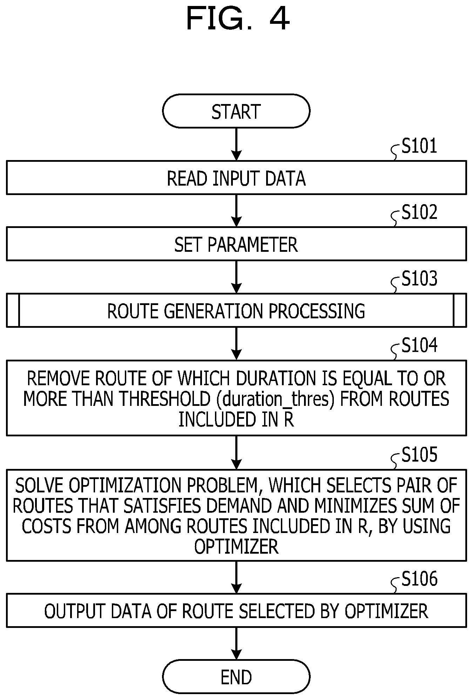

Subsequently, an example of a processing procedure of the reference device will be described. FIG. 4 is a flowchart illustrating the processing procedure of the reference device. As illustrated in FIG. 4, the reference device reads input data (step S101). The input data includes a demand of each node, a time window, a travel time between nodes. The reference device sets a parameter (step S102). The parameter includes the threshold of the duration of the route (duration_thres) that is used when the route is narrowed.

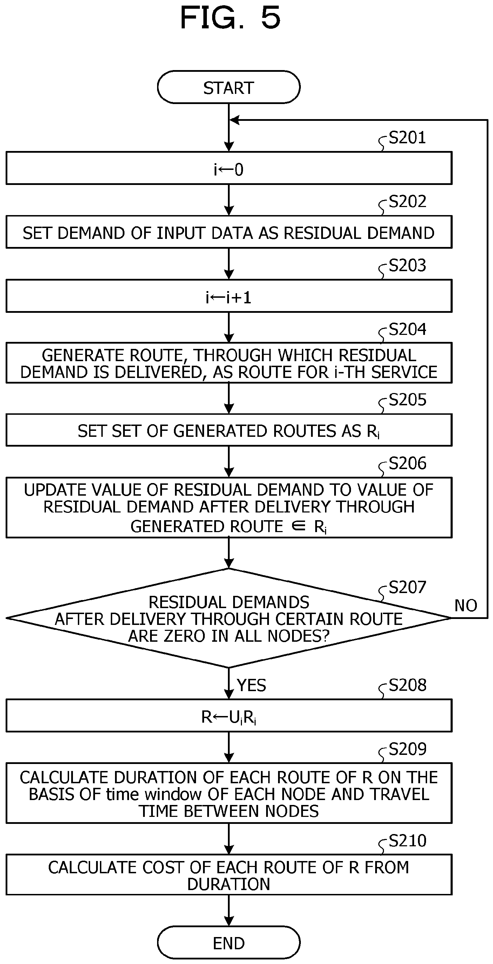

The reference device executes route generation processing (step S103). The reference device removes a route of which the duration is equal to or more than the threshold (duration_thres) from routes included in R (step S104). R will be described later with reference to FIG. 5.

The reference device solves an optimization problem, which selects a pair of routes that satisfies the demand and minimizes the sum of costs from among the routes included in R, by using the optimizer (step S105). The reference device outputs data of the route selected by the optimization problem (step S106).

Subsequently, a processing procedure of the route generation processing described in step S103 in FIG. 4 will be described. FIG. 5 is a diagram illustrating an example of the processing procedure of the route generation processing. As illustrated in FIG. 5, the reference device sets zero to i (step S201). In the description of FIG. 5, the reference i corresponds to an i-th service. The reference device sets a demand of the input data as the residual demand (step S202).

The reference device updates i to a value obtained by adding one to i (step S203). The reference device generates a route, through which the residual demand is delivered, as a route for the i-th service (step S204). The reference device sets a set of the generated routes as $R_i$ (step S205).

The reference device updates the value of the residual demand to a value of a residual demand after delivery through the generated route $\in R_i$ (step S206). In a case where residual demands after delivery through a certain route are not zero in all the nodes (step S207, No), the reference device proceeds the procedure to step S201.

In a case where the residual demands after the delivery through the certain route are zero in all the nodes (step S207, Yes), the reference device sets $U_i R_i$ (collection of routes for respective services) to R (step S208). The reference device calculates a duration of each route of R on the basis of the time window of each node and the travel time between the nodes (step S209). The reference device calculates cost of each route of R from the duration (step S210).

(Problems of Reference Technique)

As described above, according to the reference technique, for each route generated as a route for a certain service, a plurality of routes is generated in a tree structure as routes for the next service. Therefore, the number of routes generated for the subsequent services becomes enormous, and the route generation processing time increases. Furthermore, when the number of nodes, the number of trucks, and the number of demands become enormous, the enormous routes are examined and generated. Therefore, there is a possibility that the route generation processing is not completed depending on a performance of a computer.

(Processing According to First Embodiment)

In the first embodiment, a method for solving a route optimization problem when the packages are delivered to the plurality of nodes by using the plurality of mobile bodies or when the packages are delivered from the plurality of nodes is disclosed. An information processing device according to the first embodiment holds the node information that specifies each node included in the plurality of nodes, demand amount information that indicates a demand amount of each of the plurality of nodes, and the mobile body information that indicates the maximum load capacity of each of the plurality of mobile bodies.

The information processing device specifies the node group, to which the packages are delivered, among the plurality of nodes that is the node group that satisfies the maximum load capacity condition for each of the plurality of mobile bodies and generates the plurality of routes that defines the delivery order of each node included in the node group.

Moreover, by executing the processing for solving the route optimization problem on the basis of the plurality of generated routes, the information processing device specifies a node group on which each of the plurality of mobile bodies executes delivery processing and a route indicating a delivery order of each node included in the node group.

The information processing device executes the following processing when generating the plurality of routes. The information processing device executes specification processing for specifying the first node group, to which the packages are delivered by the N-th mobile body among the plurality of mobile bodies, from the plurality of nodes on the basis of the node information, the demand amount information, and the mobile body information.

Next, the information processing device executes information generation processing for generating the residual demand information indicating the residual demand after the N-th mobile body has delivered the packages for each node included in the first node group. Next, the information processing device executes information update processing for updating the node information by excluding a node having no residual demand among the plurality of nodes from the plurality of nodes on the basis of the residual demand information.

The information processing device generates the plurality of routes by sequentially executing the specification processing, the information generation processing, and the information update processing described above for each of the plurality of mobile bodies. Then, the information processing device determines whether or not the number of nodes having no residual demand is equal to or more than a predetermined value on the basis of the node information updated by the information update processing. In a case where it is determined that the number of nodes having no residual demand is equal to or more than the predetermined value, processing for sequentially executing the specification processing, the information generation processing, and the information update processing is stopped. A more detailed example will be disclosed below.

As illustrated in FIG. 1, the information processing device 100 according to the first embodiment generates a plurality of routes that satisfies conditions of the vehicle routing problem in which the plurality of vehicles delivers the packages to the plurality of nodes by using the travel time between the nodes, an amount of packages (demand) that need to be delivered from a depot to each node or from each node to the depot, and the "time window" of each node as inputs.

At this time, the information processing device 100 executes filtering based on the residual demand for each route generated as a route for a predetermined service. For example, the information processing device 100 counts the number of nodes where undelivered packages (residual demand) exist among the packages that need to be delivered, after the delivery through each route. Then, the information processing device 100 excludes the route of which the number of nodes having the residual demands is equal to or more than a threshold from the routes and generates a plurality of routes.

Thereafter, by narrowing the route from the plurality of routes, generating an objective function, inputting information regarding the plurality of routes to the Ising machine, and optimizing the objective function, the information processing device 100 calculates and outputs an optimum route for the vehicle routing problem, for example, a route that minimizes the sum of costs needed for the delivery.

In this way, the information processing device 100 can shorten a time period of the route generation processing executed before solving the optimization problem for selecting the pair of routes that minimizes the sum of the costs and can shorten the time to solve the vehicle routing problem.

[Functional Configuration of Information Processing Device 100]

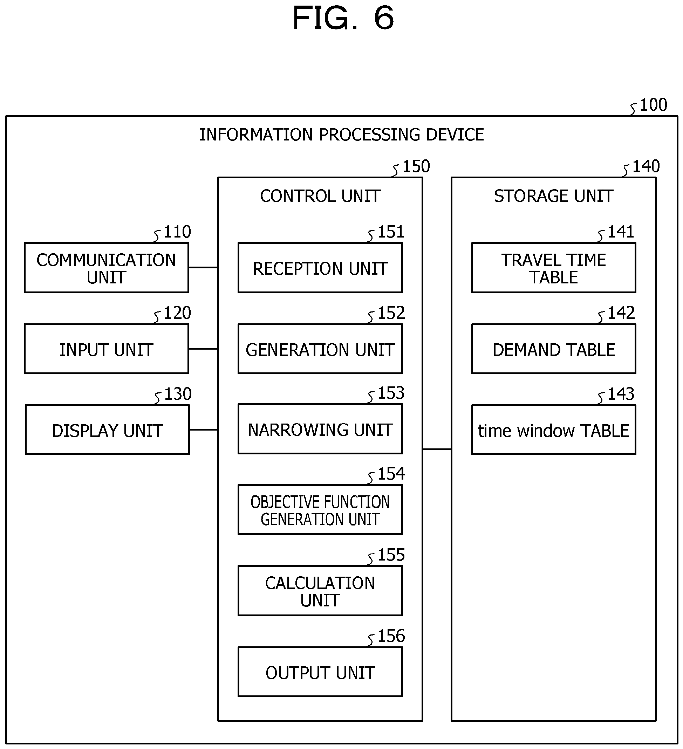

Next, a configuration of the information processing device according to the present embodiment will be described. FIG. 6 is a functional block diagram illustrating a functional configuration of the information processing device 100 according to the first embodiment. As illustrated in FIG. 6, the information processing device 100 includes a communication unit 110, an input unit 120, a display unit 130, a storage unit 140, and a control unit 150.

The communication unit 110 is a processing unit that performs data communication with an external device via a network and is implemented by, for example, a communication interface or the like. The communication unit 110 corresponds to a communication device. The control unit 150 exchanges data with an external device via the communication unit 110.

The input unit 120 is a processing unit that inputs various data to the control unit 150 of the information processing device 100. For example, the input unit 120 is implemented by, a keyboard, a mouse, a touch panel, or the like.

The display unit 130 is a processing unit that displays information output from the control unit 150. The display unit 130 is implemented by, for example, an organic Electro Luminescence (EL) display, a liquid crystal display, a touch panel, or the like.

The storage unit 140 includes a travel time table 141, a demand table 142, and a time window table 143. For example, the storage unit 140 is implemented by a semiconductor memory element such as a Random Access Memory (RAM) or a flash memory or a storage device such as a Hard Disk Drive (HDD).

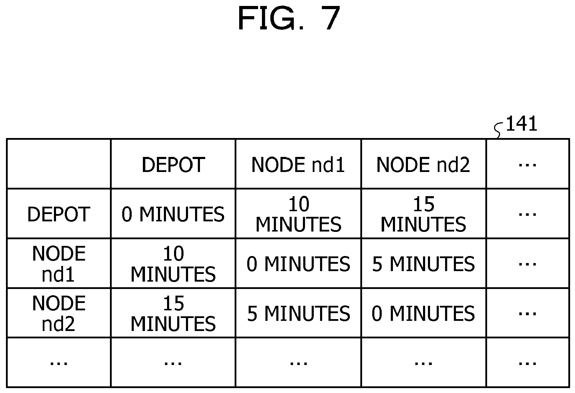

The travel time table 141 is a table that holds information regarding a travel time of a vehicle. FIG. 7 is a diagram illustrating an example of a data structure of the travel time table. As illustrated in FIG. 7, the travel time table 141 includes a travel time from a depot to a node or a node to a depot and a travel time between nodes. For example, a travel time from the depot to a node nd1 is "10 minutes". A travel time from the node nd1 to a node nd2 is "five minutes". Description of other travel times is omitted.

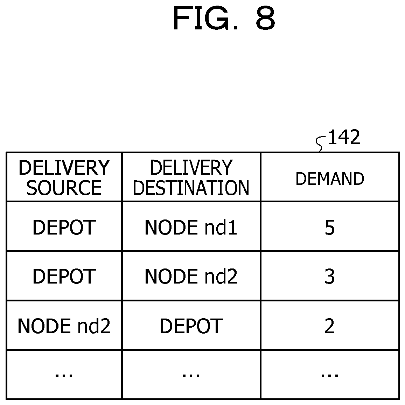

The demand table 142 is a table that holds information regarding demands. FIG. 8 is a diagram illustrating an example of a data structure of the demand table. As illustrated in FIG. 8, the demand table 142 associates a delivery source, a delivery destination, and a demand with each other. For example, in a first row in FIG. 8, it is illustrated that an amount of packages (demand) that need to be delivered from a delivery source "depot" to a delivery destination "node nd1" is "five". Description of other demands is omitted. Note that, here, information regarding the demand amount of each node stored in the demand table is referred to as the demand amount information.

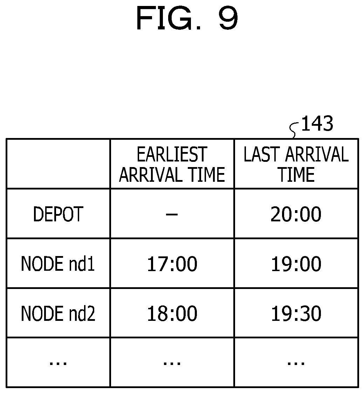

The time window table 143 is a table that holds information regarding a time band in which the vehicle can visit each node (or depot). FIG. 9 is a diagram illustrating an example of a data structure of the time window table. As illustrated in FIG. 9, the vehicle is constrained to return to the depot by 20:00. A time band in which the vehicle can visit the node nd1 is from 17:00 to 19:00. A time band in which the vehicle can visit the node nd2 is from 18:00 to 19:30. Description of other time bands in which the vehicle can visit other nodes will be omitted.

Returning to the description of FIG. 6, the control unit 150 includes a reception unit 151, a generation unit 152, a narrowing unit 153, an objective function generation unit 154, a calculation unit 155, and an output unit 156. The control unit 150 can be implemented by a central processing unit (CPU), a micro processing unit (MPU), or the like. Furthermore, the control unit 150 may also be implemented by hard wired logic such as an Application Specific Integrated Circuit (ASIC) and a Field Programmable Gate Array (FPGA).

The reception unit 151 is a processing unit that acquires the travel time table 141, the demand table 142, and the time window table 143 as the input data from an external device or the like. The reception unit 151 stores the acquired travel time table 141, demand table 142, and time window table 143 in the storage unit 140. The reception unit 151 may acquire the input data via the input unit 120. Furthermore, the storage unit 140 stores the mobile body information indicating the maximum load capacity of each truck.

The generation unit 152 is a processing unit that generates a route on the basis of the travel time table 141, the demand table 142, and the time window table 143. For example, the generation unit 152 generates a route that satisfies the conditions of the vehicle routing problem on the basis of the travel time table 141, the demand table 142, and the time window table 143 and outputs information regarding the generated route to the narrowing unit 153.

Here, the processing for generating a route executed by the generation unit 152 will be described. For example, in a case where the generation unit 152 generates each route, the generation unit 152 performs a first step to a fourth step described below in order.

The first step will be described. The generation unit 152 lists combinations each obtained by selecting p nodes from among all the nodes in order to determine nodes where the vehicle visits through a single route. All integers are considered that correspond to the number of nodes where p visits and satisfy $1 \leq p \leq p_{max}$. The value $p_{max}$ is preset as a parameter. If $p_{max}$ is set to a value that is too large, it is not possible to visit all the nodes within the time windows. Therefore, a value that is not too large is set.

The second step will be described. The generation unit 152 calculates sum of residual demands of nodes for the pair of nodes to be visited that is listed in the first step and makes a supply for the demands so as to determine whether or not to a load ratio of the vehicle exceeds a threshold. In a case where the load ratio of the vehicle does not exceed the threshold, the generation unit 152 does not generate a route that visits the set of the nodes.

The third step will be described. The generation unit 152 determines an order of visiting the pair of nodes to be visited. The generation unit 152 makes determination that the vehicle visits the nodes in an order with the shortest duration under a condition that the vehicle visits each node within the time window of each node. In a case of calculating the duration, the generation unit 152 uses data of a time period needed for travel between the nodes.

The fourth step will be described. The generation unit 152 determines supply at the node to be visited. The generation unit 152 provides the maximum supply within a range that does not exceed the maximum load capacity of the vehicle. The generation unit 152 determines the supply at each node for a route in which two or more nodes are visited while giving priority to reducing a residual demand of a node farther from the depot.

At the time when such a step is executed, the generation unit 152 counts the number of nodes of which the residual demand is larger than zero as the number of nodes having an undelivered package (residual demand) among the package amount that needs to be delivered after the delivery through each route, for each route generated as the route for the predetermined service. Then, the generation unit 152 excludes a route of which the number of counted nodes having the residual demands larger than zero is equal to or more than the threshold from the routes and generates the plurality of routes.

For example, when generating k + 1-th routes after generating k-th routes, the generation unit 152 excludes a route, in which the number of remaining nodes to be delivery destinations is equal to or more than a threshold after delivery through each of the k-th routes, from the k + 1-th routes.

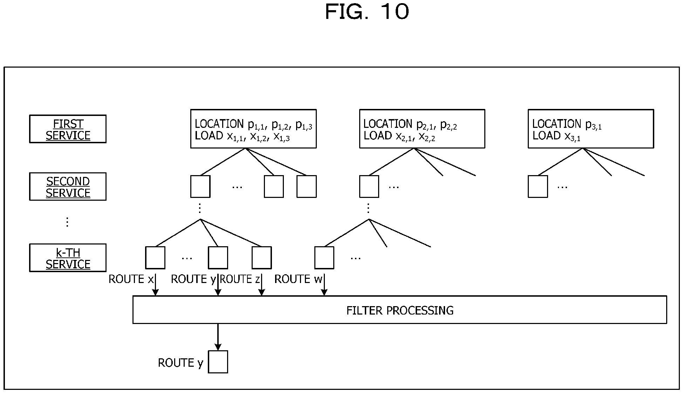

FIG. 10 is a diagram for explaining the route generation. As illustrated in FIG. 10, although the first service or the like differs, the generation unit 152 generates a route x, a route y, a route z, a route w, or the like as the k-th routes. Then, it is assumed that the generation unit 152 performs counting that the number of nodes having the residual demands after the delivery through the route x that is the k-th route is 200, the number of nodes having the residual demands after the delivery through the route y is 50, the number of nodes having the residual demands after the delivery through the route z is 100, and the number of nodes having the residual demands after the delivery through the route w is 120.

In this case, the generation unit 152 executes filter processing based on a threshold "90", excludes the route x, the route z, and the route w of which the residual demands are equal to or more than the threshold from a route generation target, and performs k + 1-th route generation for the route y of which the residual demand is less than the threshold. For example, when generating the route for the k + 1-th service, the generation unit 152 generates a route through which the residual demand after the delivery through the route y generated for the k-th service is delivered. On the other hand, the generation unit 152 does not generate a route through which the residual demand after the deliveries through the route x, the route z, and the route w generated for the k-th service is delivered.

Returning to FIG. 6, the objective function generation unit 154 is a processing unit that generates an objective function to be input to the calculation unit 155. The objective function generated by the objective function generation unit 154 is a function obtained by adding a cost term and a penalty term as indicated in Formula (1). Note that the reference $c_r$ represents cost of a route r. The reference $x_r$ is a variable ($x_r \in \{0, 1\}$) indicating whether or not to select the route r. In a case of $x_r = 0$, the route r is not selected. In a case of $x_r = 1$, the route r is selected. The reference i represents a node. The reference N represents the number of nodes. The reference $D_i$ represents a demand of the node i. The reference $S_{r,i}$ represents a supply at the node i in the route r. The reference $y_i$ is a variable (integer equal to or more than zero) indicating how much the supply at the node i exceeds the demand.

$$\text{OBJECTIVE FUNCTION} = \text{COST TERM} + \text{PENALTY TERM}$$

$$= \sum_{r \in R} c_r x_r + \alpha \sum_{i=1}^{N} \left( \sum_{r \in R} S_{r,i} x_r - D_i - y_i \right)^2 \quad \text{... Formula (1)}$$

Here, the penalty term is designed as follows. In a case where a constraint formula indicated by Formula (2) is satisfied in all i, if $y_i$ ($\geq 0$) is set to an appropriate value, the penalty term becomes zero. In a case where the constraint formula indicated by Formula (2) is not satisfied in a certain i, regardless of a value to which $y_i$ ($\geq 0$) is set, the penalty term is larger than zero. Note that Formula (2) means that the sum of the supplies in the selected route satisfies the demand in all the nodes i.

$$\sum_{r \in R} S_{r,i} x_r \geq D_i \quad \text{for any } i \qquad \text{... Formula (2)}$$

The calculation unit 155 is a processing unit that obtains a route that minimizes cost of a truck by obtaining values of $x_r$ and $y_i$ that minimize the value of the objective function generated by the objective function generation unit 154. For example, the calculation unit 155 acquires the values of $x_r$ and $y_i$ from the minimized objective function, generates a route by selecting a node with $x_r = 1$, and outputs information regarding the selected route to the output unit 156. Note that the calculation unit 155 can obtain the values of $x_r$ and $y_i$ that minimize the value of the objective function by inputting the objective function to the optimizer, for example, the Ising machine and operating the Ising machine.

The output unit 156 is a processing unit that outputs information regarding the route selected by the calculation unit 155 to the display unit 130 and displays the information on the display unit 130. The output unit 156 may notify an external device or the like of the information regarding the route. Note that an output of the calculation unit 155 is only a bit string indicating which route has been selected. The output unit 156 may compare the output bit string with a second route set and output data of the selected route.

[Flow of Processing]

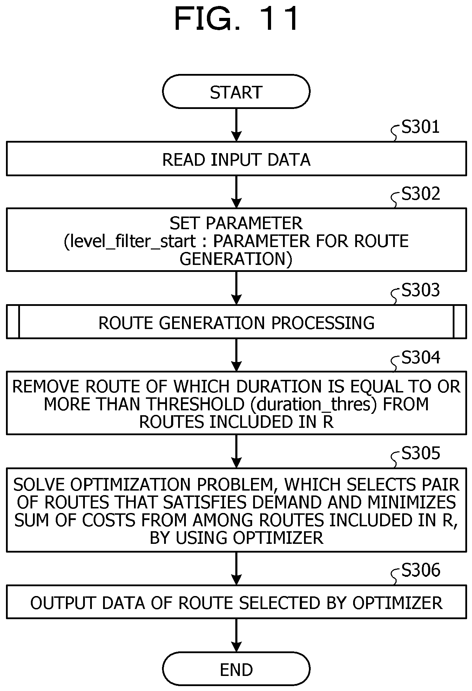

FIG. 11 is a flowchart illustrating a flow of an optimization processing procedure according to the first embodiment. As illustrated in FIG. 11, the generation unit 152 of the information processing device 100 reads input data (step S301). The input data includes a demand of each node, a time window, a travel time between nodes. The generation unit 152 sets a parameter (step S302). The parameters include the threshold of the duration of the route (duration_thres) that is used when the route is narrowed and a parameter of a filter when the route is generated "level_filter_start".

The generation unit 152 executes the route generation processing (step S303). The generation unit 152 removes a route of which a duration is equal to or more than the threshold (duration_thres) from the routes included in R (step S304).

The calculation unit 155 of the information processing device 100 solves the optimization problem, which selects a pair of routes that satisfies a demand and minimizes the sum of costs from among routes included in $R_{reduced}$, by using the optimizer, for example, the Ising machine (step S305). The output unit 156 of the information processing device 100 outputs data of the route selected by the optimization problem (step S306).

(Route Generation Processing)

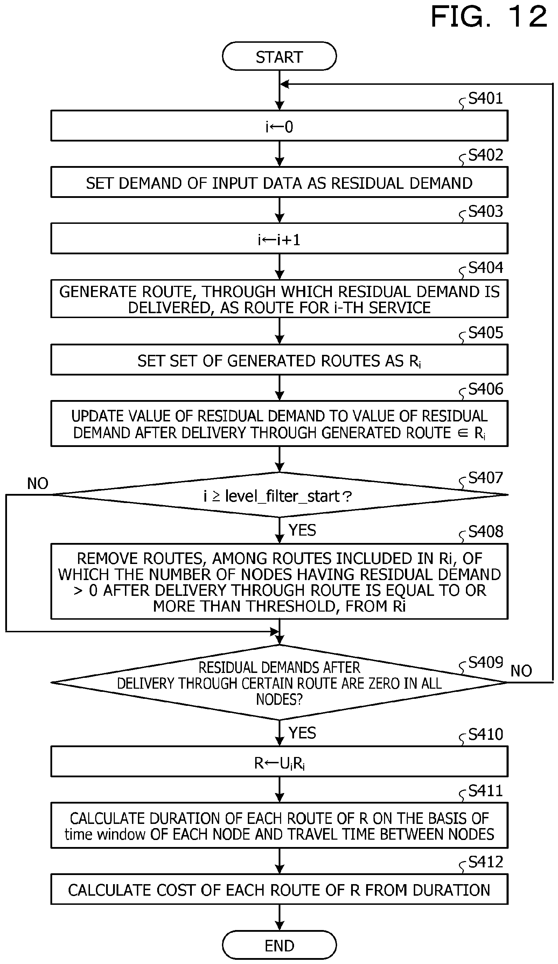

Next, the route generation processing executed in step S303 in FIG. 11 will be described. FIG. 12 is a flowchart illustrating a flow of a route generation procedure according to the first embodiment. As illustrated in FIG. 12, the generation unit 152 of the information processing device 100 sets zero to i (step S401) and sets a demand of the input data as the residual demand (step S402). Note that the reference i corresponds to the i-th service.

The generation unit 152 updates i to a value obtained by adding one to i (step S403). The generation unit 152 generates a route, through which the residual demand is delivered, as a route for the i-th service (step S404). The generation unit 152 sets a set of the generated routes as $R_i$ (step S405).

The generation unit 152 updates the value of the residual demand to a value of a residual demand after delivery through the generated route $\in R_i$ (step S406). Here, in a case where i is equal to or more than the parameter "level_filter_start" (S407, Yes), the generation unit 152 removes routes, among the routes included in $R_i$, of which the number of nodes having the residual demand >0 after the delivery through the route is equal to or more than the threshold, from $R_i$ (step S408). Note that, in a case where i is less than the parameter "level_filter_start" (S407, No), the generation unit 152 does not execute S408.

Thereafter, in a case where the residual demands after the delivery through the certain route are not zero in all the nodes (step S409, No), the generation unit 152 proceeds the procedure to step S401.

In a case where the residual demands after the delivery through the certain route are zero in all the nodes (step S409, Yes), the generation unit 152 sets $U_i R_i$ (collection of routes for respective services) to R (step S410). The generation unit 152 calculates a duration of each route of R on the basis of the time window of each node and the travel time between the nodes (step S411). The reference device calculates cost of each route of R from the duration (step S412).

[Effects]

As described above, the information processing device 100 can shorten a route generation processing time by executing the filter processing on the basis of the residual demand in the middle of the route generation. As a result, the information processing device 100 can shorten the time to solve the vehicle routing problem.

Here, effects obtained by using the information processing device 100 will be described. Here, it is assumed that the number of depots is one and the number of nodes is 22, and two types of vehicles used for delivery are prepared. Regarding a vehicle type 1, the maximum number of packages that can be loaded is 21, and delivery cost is of 17,304 to 21,363 (vary depending on duration). Regarding a vehicle type 2, the maximum number of packages that can be loaded is 12, and delivery cost is of 13,008 to 16,060 (vary depending on duration).

In such an environment, the information processing device 100 has generated routes with respect to three types of test data in which the respective nodes have different demands. Test data 1 is actual problem data. Test data 2 and test data 3 have been created by respectively increasing about five% and about 10% of the demands of the test data 1. In the test data 1, nine services of the vehicle type 1 and 39 services of the vehicle type 2 can satisfy the demands, in the test data 2, 10 services of the vehicle type 1 and 40 services of the vehicle type 2 can satisfy the demands, and in the test data 3, 10 services of the vehicle type 1 and 43 services of the vehicle type 2 can satisfy the demands.

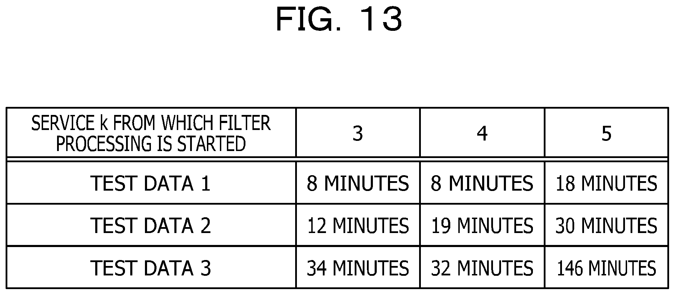

Next, a filtering result will be described. FIG. 13 is a diagram for explaining effects. In the above test data, a number of the service from which the filter processing is started is changed as k = 3, 4, 5, 6, and the time period of the route generation processing is measured. The processing time period has been illustrated in FIG. 13. As illustrated in FIG. 13, even if the value of k is set to any one of 3, 4, or 5, cost of the optimal solution obtained from the generated routes was the same. Furthermore, as illustrated in FIG. 13, by starting the filter processing at an early stage, the time period of the route generation processing can be more shortened.

[Second Embodiment]

Although the embodiment has been described above, the embodiment may be implemented in various forms in addition to the embodiment described above.

[Numerical Values or the like]

The number of vehicles, the number of nodes, various parameters such as the demands, the objective functions, or the like used in the above embodiment are only exemplary, and can be arbitrarily changed. Furthermore, the flow of the processing described in each flowchart can be appropriately changed within a consistent range.

[Filter processing]

For example, in the above embodiment, an example has been described in which the routes of which the number of nodes having one or more residual demands is equal to or more than the threshold are excluded. However, the embodiment is not limited to this. For example, it is possible to select a route of which the number of nodes having one or more residual demands is the smallest or a predetermined number of routes in an increasing order of the number of nodes having one or more residual demands and exclude routes other than the selected routes. In this way, while suppressing narrowing, the processing time period can be shortened.

[System]

Pieces of information including a processing procedure, a control procedure, a specific name, various data, and parameters described herein or illustrated in the drawings may be changed in any ways unless otherwise specified. Note that the generation unit 152 is an example of a generation unit, the objective function generation unit 154 is an example of an objective function generation unit, and the calculation unit 155 is an example of a calculation unit.

Furthermore, the respective components of the respective devices illustrated in the drawings are functionally conceptual and do not necessarily have to be physically configured as illustrated in the drawings. For example, specific forms of distribution and integration of the individual devices are not restricted to those illustrated in the drawings. For example, all or a part of the devices may be configured by being functionally or physically distributed and integrated in any units according to various sorts of loads, usage situations, or the like.

Moreover, all or any part of individual processing functions performed in individual devices may be implemented by a CPU and a program analyzed and executed by the CPU, or may be implemented as hardware by wired logic.

[Hardware]

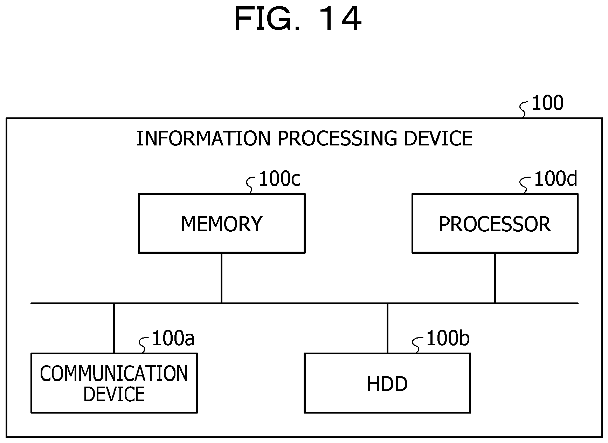

Next, a hardware configuration of the information processing device 100 will be described. FIG. 14 is a diagram for explaining an exemplary hardware configuration. As illustrated in FIG. 14, the information processing device 100 includes a communication device 100a, a Hard Disk Drive (HDD) 100b, a memory 100c, and a processor 100d. Furthermore, the units illustrated in FIG. 14 are mutually connected by a bus or the like.

The communication device 100a is a network interface card or the like and communicates with another server. The HDD 100b stores programs and DBs that operate the functions illustrated in FIG. 6.

The processor 100d reads a program that executes processing similar to that of each processing unit illustrated in FIG. 6 from the HDD 100b or the like, to develop the read program in the memory 100c so as to activate a process that executes each function described with reference to FIG. 6 or the like. For example, this process executes a function similar to the function of each processing unit included in the information processing device 100. Specifically, the processor 100d reads a program having functions similar to the reception unit 151, the generation unit 152, the narrowing unit 153, the objective function generation unit 154, the calculation unit 155, the output unit 156, or the like from the HDD 100b or the like. Then, the processor 100d executes a process that executes processing similar to those of the reception unit 151, the generation unit 152, the narrowing unit 153, the objective function generation unit 154, the calculation unit 155, the output unit 156, or the like.

As described above, the information processing device 100 operates as an information processing device that executes an information processing method by reading and executing the program. Furthermore, the information processing device 100 can also implement functions similar to the functions of the above-described embodiment by reading the program described above from a recording medium by a medium reading device and executing the read program. Note that this program in the other embodiment is not limited to being executed by the information processing device 100. For example, the embodiments may be similarly applied to a case where another computer or server executes the program, or a case where such computer and server cooperatively execute the program.

[REFERENCE SIGNS LIST]

100 information processing device
110 communication unit
120 input unit
130 display unit
140 storage unit
141 travel time table
142 demand table
143 time window table
150 control unit
151 reception unit
152 generation unit
153 narrowing unit
154 objective function generation unit
155 calculation unit
156 output unit

[CITATION LIST]

Japanese Laid-open Patent Publication No. 2019-28992.

## Claims

1. An information processing device comprising:

a storage unit configured to store, with respect to a route optimization problem that packages are delivered to or from a plurality of nodes by using a plurality of mobile bodies, node information that specifies each node included in the plurality of nodes, demand amount information that indicates a demand amount of each of the plurality of nodes, and mobile body information that indicates a maximum load capacity of each of the plurality of mobile bodies;
a generation unit configured to specify a node group, among the plurality of nodes, to which the packages are delivered and that satisfies a condition of the maximum load capacity for each of the plurality of mobile bodies and generate a plurality of routes that defines a delivery order of each node included in the node group; and
a calculation unit configured to execute processing for solving the route optimization problem on the basis of the plurality of routes generated by the generation unit, wherein
the generation unit is configured to execute processes on the basis of the node information, the demand amount information, and the mobile body information, the processes including:

performing a specification process configured to specify a first node group to which the packages are delivered by an N-th mobile body of the plurality of mobile bodies from among the plurality of nodes;
performing an information generation process configured to generate residual demand information that indicates a residual demand after the packages are delivered by the N-th mobile body for each node included in the first node group; and
performing an information update process configured to update the node information by excluding a node that has no residual demand among the plurality of nodes from the plurality of nodes on the basis of the residual demand information,

the generation process is configured to:

sequentially executes, for each of the plurality of mobile bodies, the specification process, the information generation process, and the information update process;

obtain a determination result by determining whether the number of nodes that has no residual demand is equal to or more than a predetermined value on the basis of the node information updated by the information update process; and

in response to the determination result indicating that the number of nodes that has no residual demand is equal to or more than the predetermined value, stop processing for sequentially executing the specification process, the information generation process, and the information update process.

2. The information processing device according to claim 1, wherein
the calculation unit inputs information regarding the plurality of routes generated by the generation unit to an Ising machine and calculates an optimum route that minimizes cost for the plurality of mobile bodies.

3. The information processing device according to claim 1 or 2, wherein
the generation unit generates the plurality of routes by excluding a route other than the routes that have the minimum number among the routes or a route other than a predetermined number of routes selected from the routes that have a less number among the routes.

4. The information processing device according to claim 2, further comprising:

an objective function generation unit configured to generate an objective function that has a first term that calculates the cost when each route is executed and a second term based on a demand amount of each node and a supply amount to each node in each route for the plurality of routes generated by the generation unit, wherein

the calculation unit inputs the objective function to the Ising machine and calculates the optimum route that minimizes the cost.

5. An information processing method implemented by a computer, the method comprising:

obtaining, with respect to a route optimization problem that packages are delivered to or from a plurality of nodes by using a plurality of mobile bodies, node information that specifies each node included in the plurality of nodes, demand amount information that indicates a demand amount of each of the plurality of nodes, and mobile body information that indicates a maximum load capacity of each of the plurality of mobile bodies;

executing a generation process configured to specify a node group, among the plurality of nodes, to which the packages are delivered and that satisfies a condition of the maximum load capacity for each of the plurality of mobile bodies and generate a plurality of routes that defines a delivery order of each node included in the node group; and

executing a calculation process configured to execute processing for solving the route optimization problem on the basis of the plurality of routes generated by the generation process, wherein

the generation process is configured to execute processes on the basis of the node information, the demand amount information, and the mobile body information, the processes including:

performing a specification process configured to specify a first node group to which the packages are delivered by an N-th mobile body of the plurality of mobile bodies from among the plurality of nodes;

performing an information generation process configured to generate residual demand information that indicates a residual demand after the packages are delivered by the N-th mobile body for each node included in the first node group; and

performing an information update process configured to update the node information by excluding a node that has no residual demand among the plurality of nodes from the plurality of nodes on the basis of the residual demand information,

the generation process is configured to:

sequentially executes, for each of the plurality of mobile bodies, the specification process, the information generation process, and the information update process;

obtain a determination result by determining whether the number of nodes that has no residual demand is equal to or more than a predetermined value on the basis of the node information updated by the information update process; and

in response to the determination result indicating that the number of nodes that has no residual demand is equal to or more than the predetermined value, stop processing for sequentially executing the specification process, the information generation process, and the information update process.

6. An information processing program comprising instructions which, when the program is executed by computer, cause the computer to carry out processing, the processing including:

obtaining, with respect to a route optimization problem that packages are delivered to or from a plurality of nodes by using a plurality of mobile bodies, node information that specifies each node included in the plurality of nodes, demand amount information that indicates a demand amount of each of the plurality of nodes, and mobile body information that indicates a maximum load capacity of each of the plurality of mobile bodies;

executing a generation process configured to specify a node group, among the plurality of nodes, to which the packages are delivered and that satisfies a condition of the maximum load capacity for each of the plurality of mobile bodies and generate a plurality of routes that defines a delivery order of each node included in the node group; and

executing a calculation process configured to execute processing for solving the route optimization problem on the basis of the plurality of routes generated by the generation process, wherein

the generation process is configured to execute processes on the basis of the node information, the demand amount information, and the mobile body information, the processes including:

performing a specification process configured to specify a first node group to which the packages are delivered by an N-th mobile body of the plurality of mobile bodies from among the plurality of nodes;

performing an information generation process configured to generate residual demand information that indicates a residual demand after the packages are delivered by the N-th mobile body for each node included in the first node group; and

performing an information update process configured to update the node information by excluding a node that has no residual demand among the plurality of nodes from the plurality of nodes on the basis of the residual demand information,

the generation process is configured to:

sequentially executes, for each of the plurality of mobile bodies, the specification process, the information generation process, and the information update process;

obtain a determination result by determining whether the number of nodes that has no residual demand is equal to or more than a predetermined value on the basis of the node information updated by the information update process; and

in response to the determination result indicating that the number of nodes that has no residual demand is equal to or more than the predetermined value, stop processing for sequentially executing the specification process, the information generation process, and the information update process.

# FIG. 1

ROUTE

INFORMATION PROCESSING DEVICE 100

FILTERING BASED ON
RESIDUAL DEMAND

INPUT (TRAVEL TIME
BETWEEN NODES)

INPUT (DEMAND)

INPUT (time window)

GENERATE ROUTE → NARROW ROUTE → GENERATE OBJECTIVE
FUNCTION → CALCULATE → OUTPUT

FIG. 2

# FIG. 3

# FIG. 4

START

S101

READ INPUT DATA

S102

SET PARAMETER

S103

ROUTE GENERATION PROCESSING

S104

REMOVE ROUTE OF WHICH DURATION IS EQUAL TO OR MORE THAN THRESHOLD (duration_thres) FROM ROUTES INCLUDED IN R

S105

SOLVE OPTIMIZATION PROBLEM, WHICH SELECTS PAIR OF ROUTES THAT SATISFIES DEMAND AND MINIMIZES SUM OF COSTS FROM AMONG ROUTES INCLUDED IN R, BY USING OPTIMIZER

S106

OUTPUT DATA OF ROUTE SELECTED BY OPTIMIZER

END

# FIG. 5

```
                    START

                                      ⌐S201
              i←0

                                      ⌐S202
    SET DEMAND OF INPUT DATA AS RESIDUAL DEMAND

                                      ⌐S203
              i←i+1

                                      ⌐S204
     GENERATE ROUTE, THROUGH WHICH RESIDUAL
    DEMAND IS DELIVERED, AS ROUTE FOR i-TH SERVICE

                                      ⌐S205
       SET SET OF GENERATED ROUTES AS Ri

                                      ⌐S206
    UPDATE VALUE OF RESIDUAL DEMAND TO VALUE OF
      RESIDUAL DEMAND AFTER DELIVERY THROUGH
             GENERATED ROUTE ∈ Ri
```

S207

RESIDUAL DEMANDS
AFTER DELIVERY THROUGH CERTAIN ROUTE
ARE ZERO IN ALL NODES?

NO

YES

S208

$R \leftarrow U_i R_i$

S209

CALCULATE DURATION OF EACH ROUTE OF R ON THE
BASIS OF time window OF EACH NODE AND TRAVEL
TIME BETWEEN NODES

S210

CALCULATE COST OF EACH ROUTE OF R FROM
DURATION

END

# FIG. 6

INFORMATION PROCESSING DEVICE ⌇100

CONTROL UNIT ⌇150

STORAGE UNIT ⌇140

COMMUNICATION UNIT ⌇110

INPUT UNIT ⌇120

DISPLAY UNIT ⌇130

RECEPTION UNIT ⌇151

GENERATION UNIT ⌇152

NARROWING UNIT ⌇153

OBJECTIVE FUNCTION GENERATION UNIT ⌇154

CALCULATION UNIT ⌇155

OUTPUT UNIT ⌇156

TRAVEL TIME TABLE ⌇141

DEMAND TABLE ⌇142

time window TABLE ⌇143

# FIG. 7

141

|  | DEPOT | NODE nd1 | NODE nd2 | ... |
|---|---|---|---|---|
| DEPOT | 0 MINUTES | 10 MINUTES | 15 MINUTES | ... |
| NODE nd1 | 10 MINUTES | 0 MINUTES | 5 MINUTES | ... |
| NODE nd2 | 15 MINUTES | 5 MINUTES | 0 MINUTES | ... |
| ... | ... | ... | ... | ... |

# FIG. 8

142

| DELIVERY SOURCE | DELIVERY DESTINATION | DEMAND |
|---|---|---|
| DEPOT | NODE nd1 | 5 |
| DEPOT | NODE nd2 | 3 |
| NODE nd2 | DEPOT | 2 |
| ... | ... | ... |

# FIG. 9

143

|  | EARLIEST ARRIVAL TIME | LAST ARRIVAL TIME |
|---|---|---|
| DEPOT | — | 20:00 |
| NODE nd1 | 17:00 | 19:00 |
| NODE nd2 | 18:00 | 19:30 |
| … | … | … |

FIG. 10

FIRST
SERVICE

SECOND
SERVICE

⋮

k-TH
SERVICE

LOCATION $p_{1,1}$, $p_{1,2}$, $p_{1,3}$
LOAD $x_{1,1}$, $x_{1,2}$, $x_{1,3}$

LOCATION $p_{2,1}$, $p_{2,2}$
LOAD $x_{2,1}$, $x_{2,2}$

LOCATION $p_{3,1}$
LOAD $x_{3,1}$

... 

⋮

... 

⋮

... 

... 

ROUTE x    ROUTE y|ROUTE z|    ROUTE w

FILTER PROCESSING

ROUTE y

# FIG. 11

```
                    START

                                          S301
           READ INPUT DATA

                                          S302
           SET PARAMETER
  (level_filter_start : PARAMETER FOR ROUTE
             GENERATION)

                                          S303
      ROUTE GENERATION PROCESSING

                                          S304
  REMOVE ROUTE OF WHICH DURATION IS EQUAL TO OR
  MORE THAN THRESHOLD (duration_thres) FROM
           ROUTES INCLUDED IN R

                                          S305
  SOLVE OPTIMIZATION PROBLEM, WHICH SELECTS PAIR
   OF ROUTES THAT SATISFIES DEMAND AND MINIMIZES
  SUM OF COSTS FROM AMONG ROUTES INCLUDED IN R,
             BY USING OPTIMIZER

                                          S306
  OUTPUT DATA OF ROUTE SELECTED BY OPTIMIZER

                     END
```

# FIG. 12

```
         ( START )
             │
             ▼                    S401
   ┌─────────────────────────┐
   │         i←0             │
   └─────────────────────────┘
             │
             ▼                    S402
   ┌─────────────────────────┐
   │ SET DEMAND OF INPUT DATA │
   │    AS RESIDUAL DEMAND    │
   └─────────────────────────┘
             │
             ▼                    S403
   ┌─────────────────────────┐
   │         i←i+1           │
   └─────────────────────────┘
             │
             ▼                    S404
   ┌─────────────────────────┐
   │ GENERATE ROUTE, THROUGH  │
   │ WHICH RESIDUAL DEMAND IS │
   │ DELIVERED, AS ROUTE FOR  │
   │      i-TH SERVICE        │
   └─────────────────────────┘
             │
             ▼                    S405
   ┌─────────────────────────┐
   │ SET SET OF GENERATED     │
   │      ROUTES AS $R_i$     │
   └─────────────────────────┘
             │
             ▼                    S406
   ┌─────────────────────────┐
   │ UPDATE VALUE OF RESIDUAL  │
   │ DEMAND TO VALUE OF RESIDUAL│
   │ DEMAND AFTER DELIVERY     │
   │ THROUGH GENERATED ROUTE   │
   │         ∈ $R_i$          │
   └─────────────────────────┘
             │
             ▼                    S407
  NO   ◇ i ≥ level_filter_start ? ◇
   │          │ YES
   │          ▼                   S408
   │ ┌─────────────────────────┐
   │ │ REMOVE ROUTES, AMONG    │
   │ │ ROUTES INCLUDED IN Ri,  │
   │ │ OF WHICH THE NUMBER OF  │
   │ │ NODES HAVING RESIDUAL   │
   │ │ DEMAND > 0 AFTER        │
   │ │ DELIVERY THROUGH ROUTE  │
   │ │ IS EQUAL TO OR MORE     │
   │ │ THAN THRESHOLD, FROM Ri │
   │ └─────────────────────────┘
   │          │
   └──────────┤
              ▼                   S409
   ◇ RESIDUAL DEMANDS AFTER         ◇  NO
   ◇ DELIVERY THROUGH CERTAIN ROUTE ◇───
   ◇ ARE ZERO IN ALL NODES?         ◇
              │ YES
              ▼                   S410
   ┌─────────────────────────┐
   │       $R←U_iR_i$        │
   └─────────────────────────┘
              │
              ▼                   S411
   ┌─────────────────────────┐
   │ CALCULATE DURATION OF    │
   │ EACH ROUTE OF R ON THE   │
   │ BASIS OF time window OF  │
   │ EACH NODE AND TRAVEL     │
   │ TIME BETWEEN NODES       │
   └─────────────────────────┘
              │
              ▼                   S412
   ┌─────────────────────────┐
   │ CALCULATE COST OF EACH   │
   │ ROUTE OF R FROM DURATION │
   └─────────────────────────┘
              │
              ▼
          ( END )
```

# FIG. 13

| SERVICE k FROM WHICH FILTER PROCESSING IS STARTED | 3 | 4 | 5 |
|---|---|---|---|
| TEST DATA 1 | 8 MINUTES | 8 MINUTES | 18 MINUTES |
| TEST DATA 2 | 12 MINUTES | 19 MINUTES | 30 MINUTES |
| TEST DATA 3 | 34 MINUTES | 32 MINUTES | 146 MINUTES |

# FIG. 14

# FIG. 15

Europäisches
Patentamt

European
Patent Office

Office européen
des brevets

## EUROPEAN SEARCH REPORT

Application Number

EP 21 15 3206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/159206 A1 (BARAHONA FRANCISCO [US] ET AL) 20 June 2013 (2013-06-20) * paragraph [0009]; figures 1-9 * ----- | 1-6 | INV. G06Q10/04 G06Q50/28 |

TECHNICAL FIELDS
SEARCHED     (IPC)

G06Q

The present search report has been drawn up for all claims

| Place of search | Date of completion of the search | Examiner |
|---|---|---|
| Munich | 11 June 2021 | Liendl, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 15 3206

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2021

| Patent document cited in search report | Publication date | Patent family member(s) | Publication date |
|---|---|---|---|
| US 2013159206 A1 | 20-06-2013 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019028992 A